# EUROPEAN PATENT SPECIFICATION

(11) **EP 3 217 450 B1**
(45) Date of publication and mention of the grant of the patent: **06.11.2019**
(21) Application number: 16176844.5
(22) Date of filing: 29.06.2016
(51) Int. Cl.: H01M 2/10, H01M 10/04

(54) **BATTERY MODULE**
BATTERIEMODUL
MODULE DE BATTERIE

(30) Priority: 07.03.2016 JP 2016043034
(43) Date of publication of application: 13.09.2017
(73) Proprietor: Kabushiki Kaisha Toshiba, Tokyo 105-8001 (JP)
(72) Inventor: Ogawa, Takaya, Tokyo, 105-8001 (JP); Aikawa, Shinya, Tokyo, 198-0024 (JP); Iwata, Masato, Tokyo, 105-8001 (JP)
(74) Representative: Hoffmann Eitle

(56) References cited:
- EP-A1- 3 026 730
- WO-A1-2014/024431
- WO-A1-2015/012292
- US-A1- 2016 036 103

## Description

### FIELD

Embodiments described herein relate generally to a battery module comprising a plurality of battery cells stacked one upon another.

### BACKGROUND

As a relatively high-power secondary battery, a battery module is hitherto known in which a plurality of battery cells are stacked and assembled as a unit and are connected to one another in series or in parallel.

It is known in the art that a gas is generated inside a battery cell in accordance with the deterioration with time, and that the internal pressure in the battery cell increases, expanding the case of that battery cell. In a battery module wherein a plurality of battery cells are stacked one upon another, the case of a battery cell may expand, and the battery module may change in outer shape. It is also known that the battery module whose outer shape has changed has poor performance. In order to suppress the expansion of each battery cell, the stacked battery cells are constrained using a frame.

However, if the frame is too rigid, the battery module may not be assembled efficiently. Conversely, if the frame is not sufficiently rigid, expansion of the battery cells of the battery module cannot be suppressed.

Under the circumstances, there is a demand for a battery module in which the rigidity of the frame for constraining the battery cells increases in accordance with the expansion of the deteriorated battery cells and which can be assembled easily.

Document WO 2014/024431 A1, 13 February 2014, relates to a battery system in which the pair of end plates are disposed at both ends of a battery stack resulting from stacking a plurality of rectangular batteries, and both ends of the binding bar are joined to the corners of the pair of end plates. The binding bar results from joining a horizontal section and a vertical section to result in a cross-sectional shape that is an L shape, and end surface plates are joined to the ends thereof.

### SUMMARY OF THE INVENTION

The present invention provides a battery module as set out in the attached claim 1.

### BRIEF DESCRIPTION OF THE DRAWINGS

FIG. 1 is an exploded perspective view illustrating a battery module according to the first embodiment.
FIG. 2 is a perspective view showing a frame used in the battery module depicted in FIG. 1.
FIG. 3 is a schematic view showing a main part of the battery module depicted in FIG. 1.
FIG. 4 is an explanatory view illustrating how the battery cell unit depicted in FIG. 3 is before and after expansion.
FIG. 5 is a schematic view illustrating a state in which the battery cells of the battery module depicted in FIG. 3 begin to expand.
FIG. 6 is a schematic view illustrating a state in which the battery cells of the battery module depicted in FIG. 3 expand further.
FIG. 7 is a schematic view showing a main part of a battery module according to the second embodiment.
FIG. 8 is a schematic view illustrating a state in which the battery cells of the battery module depicted in FIG. 7 expand.
FIG. 9 is a schematic view showing a main part of a battery module according to the third embodiment.
FIG. 10 is a schematic view illustrating a state in which the battery cells of the battery module depicted in FIG. 9 expand.
FIG. 11 is a graph showing the relation between the expansion of the battery cells of the first, second and third embodiments and the load exerted on frames.

### DETAILED DESCRIPTION

According to one embodiment, a battery module include a block-like battery cell unit in which a plurality of battery cells and a plurality of separators are stacked, and a frame which constrains the battery cell unit in a stacking direction. The end separators provided at the respective ends in the stacking direction of the battery cell unit have angular portions opposed to the frame, and these angular portions of the end separators are away from the angular portions of the frame, with gaps interposed.

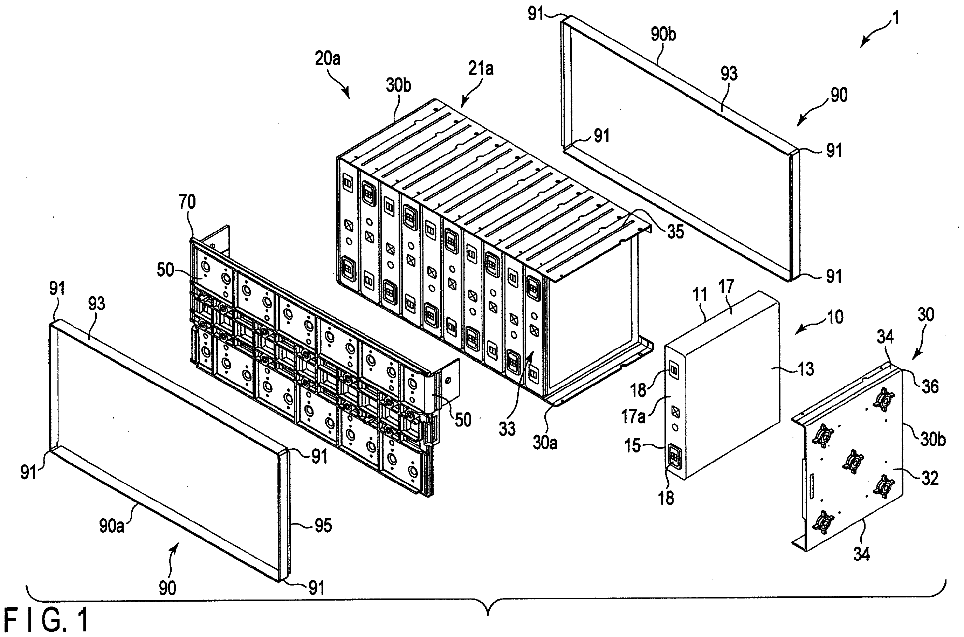

A battery module 1 according to the first embodiment will be described with reference to FIG. 1.

As shown in FIG. 1, the battery module 1 comprises a plurality of battery cells 10, a plurality of separators 30, a plurality of bus bars 50, a terminal-side frame 70, and a plurality of frames 90. In the present embodiment, for example eleven battery cells 10 and twelve separators 30 are alternately stacked in such a manner as to form a battery cell unit 21a. A stack structure 20a includes the battery cell unit 21a, and two frames 90a and 90b for constraining the battery cell unit 21a.

Each battery cell 10 includes a rectangular case 11. The case 11 includes a first wall 13 and a second wall 15 which are substantially square and opposed to each other in parallel, and four side walls 17 which connect the periphery of the first wall 13 and the periphery of the second wall 15. One of the side walls 17 is used as a terminal wall 17a. Two terminals are provided on the terminal wall 17a in such a manner that they are away from each other. One of the two terminals 18 is a positive terminal and the other is a negative terminal. A nonaqueous electrolyte fills the interior of the case 11.

The battery cells 10 are arranged in such a manner that the terminal walls 17a of the cases 11 are oriented in the same direction. The terminal walls 17a face a terminal-side frame 70. The battery cells 10 are stacked in such a manner that the positive terminal and negative terminal of each adjacent pair of battery cells 10 alternate. The battery cells 10 are stacked, with the separators 30 interposed in between. With this structure, either the first walls 13 or the second walls 15 face each other in each adjacent pair of battery cells 10. The terminal walls 17a of the respective cases 11 function as the terminal face 33 of the stack structure 20a.

The separators 30 include ten first separators 30a interposed between the battery cells 10, and two second separators 30b located at the respective ends of the stack structure 20a as defined in the stacking direction. In the description below, the two types of separators 30a and 30b (namely, the first and second separators) may be referred to simply as separators 30. Each separator 30 is formed, for example, of an insulating resin material.

Each of the first separators 30a is a frame including a substantially square inner frame which has practically the same shape as the first wall 13 and second wall 15 of the battery cell 10. Each first separator 30a includes two band portions 35, which are wide as viewed in the stacking direction. The two band portions 35 are opposed to each other.

Each first separator 30a is interposed between the adjacent battery cells 10. In other words, each battery cell 10 is located between the two band portions 35 of the two first separators 30a arranged in the stacking direction. That is, each first separator 30a is assembled such that the two band portions 35 thereof face the side walls 17 of the case 11, and the terminal face 33 of the stack structure 20a is thus prevented from being covered with the band portions 35.

Each second separator 30b includes a substantially square end plate 32 which has practically the same shape as the first wall 13 and second wall 15 of the battery cell 10, and two side portions 34 integrally extending in the same direction from the opposite two sides of the end plate 32. Each second separator 30b is assembled such that the two side portions 34 thereof face the side walls 17 of the case 11, and the terminal face 33 of the stack structure 20a is thus prevented from being covered with the side portions 34. In other words, the two faces perpendicular to the terminal face 33 of the battery cell unit 21a are covered with the band portions 35 of the first separator 30a and the side portions 34 of the second separator 30b.

The frames 90 constrain the battery cell unit 21a in the stacking direction. The frames 90 are fixed in contact with part of the band portions 35 of the first separators 30a and part of the end plates 32 and side portions 34 of the two second separators 30b. The frames 90 include a first frame 90a shown as being located at the front in FIG. 1 (i.e., the frame close to the terminal face 33) and a second frame 90b shown as being located at the rear in FIG. 1. The first and second frames 90a and 90b are formed, for example, of a metallic material and are insulated. In the description below, the first and second frames 90a and 90b may be referred to simply as frames 90. The frames 90 need not be formed of a metallic material; they may be formed of a synthetic resin having sufficient mechanical strength.

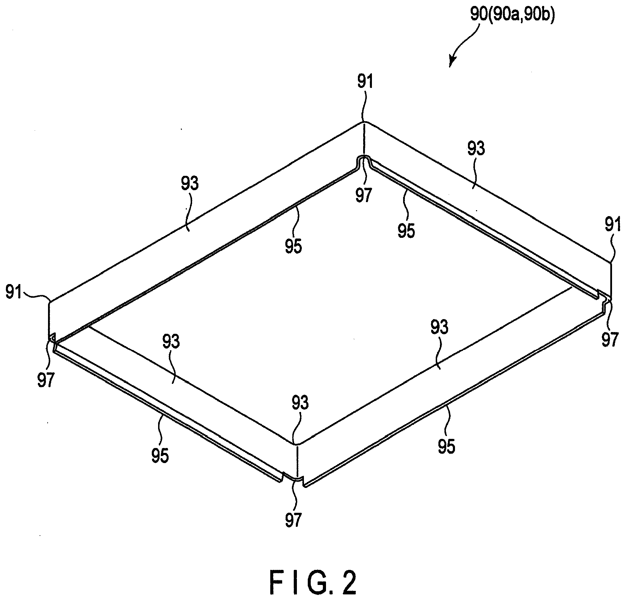

The frames 90 are rectangular and are somewhat larger than the end face 33 of the battery cell unit 21a. As shown in FIG. 2, each frame 90 includes four angular portions 91 and four peripheral walls 93. Of the four peripheral walls 93, a pair of longer peripheral walls 93 opposed to each other are made to face the band portions 35 and side portions 34 of the separators 30 in the fitted state of the frame 90.

As shown in FIGS. 1 and 2, each of the four peripheral walls 93 is provided with a tapered introduction plate 95 on one side thereof. The introduction plate 95 extends in the longitudinal direction of the peripheral wall and is slightly bent outward. When the frame 90 is fixed to the battery cell unit 21a, the introduction plates 95 serve to guide the peripheral portions of the battery cell unit 21a into the frame 90. The longitudinal ends of the four introduction plates 95 are away from each other. A recess 97 is formed at each corner portion 91 of the frame 90.

When the frame having this structure is fitted on the battery cell unit 21a, the tapered surfaces of the introduction plates 95 serve as guides. Therefore, even an inexperienced operator can easily fit the frame 90 on the battery cell unit 21a.

As shown in FIG. 1, each bus bar 50 electrically connects the terminals 18 (positive and negative terminals) of the two battery cells 10 that are adjacent in the stacking direction. The bus bar 50 is a plate-like conductive member. As described above, the battery cells 10 are stacked in such a manner that the positive terminal and negative terminal of each adjacent pair of battery cells 10 alternate. With this arrangement, the terminals of the two battery cells that are adjacent in the stacking direction are different in polarity. That is, the bus bars 50 (50a) electrically connect the battery cells 10 together.

The terminal-side frame 70 is a frame that is arranged to face the terminal face 33 of the stack structure 20a. The terminal-side frame 70 includes a plurality of attachment window holes. One bus bar 50 is fitted in each of the attachment window holes of the terminal-side frame 70. The terminal-side frame 70 to which the bus bars 50 are attached is fixed to the terminal face 33 of the stack structure 20a. The bus bars 50 attached to the terminal-side frame 70 electrically connect the terminals 18 of the respective battery cells 10. The bus bars 50 and the terminals 18 are fixed, for example, by welding.

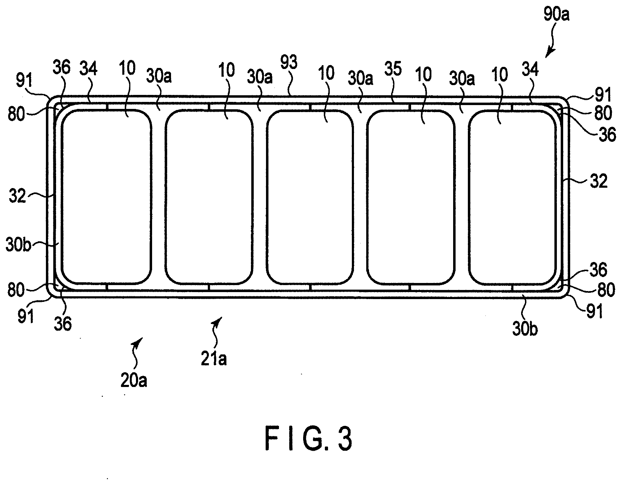

FIG. 3 is a schematic view showing the stack structure 20a, which is a main part of the battery module 1. Although FIG. 3 shows the same stack structure as the battery module depicted in FIG. 1, the illustration of part of the battery cells 10 is omitted for simplicity. The stack structure 20a includes a battery cell unit 21a and two frames 90a and 90b.

As described above, each second separator 30b includes an end plate 32 and two side portions 34 integral with the end plate 32, and has a substantially "U"-shaped section. Angular portions 36 are provided between the end plate 32 and the respective side portions 34. In the present embodiment, the end plate 32, the two side portions 34 and the angular portions 36 are made of a resin and are integrally formed as one piece.

The angular radius of the angular portions 36 of the second separator 30b is larger than the angular radius of angular portions 91 of the frame 90a. A gap 80 is provided between the angular portions 91 of the frame 90a and the angular portions 36 of the second separator 30b. That is, the gap 80 is provided between the frame 90a and the battery cell unit 21a. Because of the gap 80, the frame 90a can be elastically deformed when it is fitted on the battery cell unit 21a. Accordingly, the frame 90a can be easily fitted on the battery cell unit 21a. In short, the gap 80 enables easy assembly of the frame 90a.

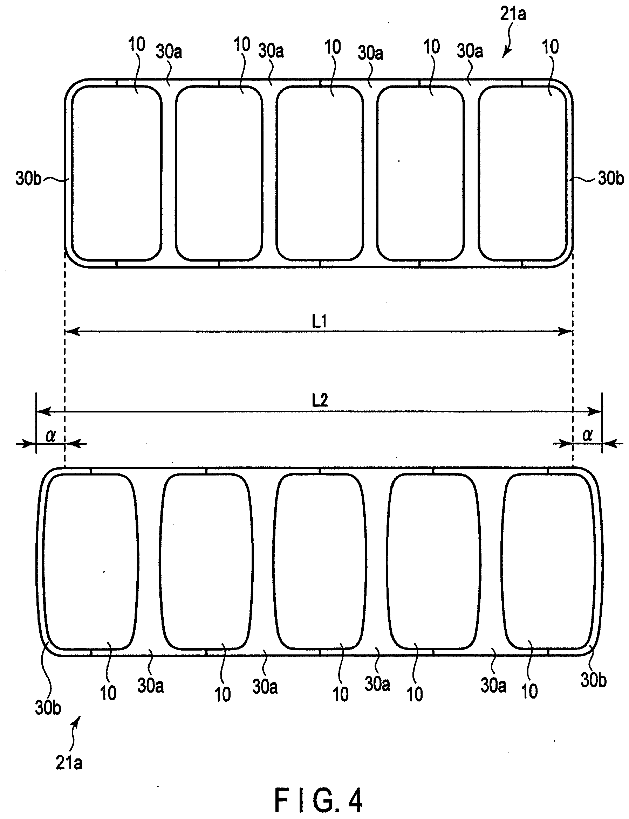

Next, the expansion of the battery cells 10 will be described with reference to FIG. 4. In FIG. 4, the illustration of the frame 90a is omitted so that the expansion of the battery module 1 can be easily understood.

FIG. 4 illustrates how the battery cell unit 21a is before it is expanded (in the upper half of FIG. 4), and also illustrates how the battery cell unit 21a is after it is expanded (in the lower half of FIG. 4). In FIG. 4, L1 denotes the length of the battery cell unit 21a containing unexpanded battery cells 10 (in the upper half of FIG. 4). After the battery cells 10 are expanded, the length of the battery cell unit 21a increases from L1 to L2 (the length increases by a at each end of the longitudinal direction). The angular portions of the adjacent battery cells 10 move away from each other in the longitudinal direction because the cases 11 are deformed. Due to the expansion of the battery cells, the second separator 30b at each end moves by α in the longitudinal direction.

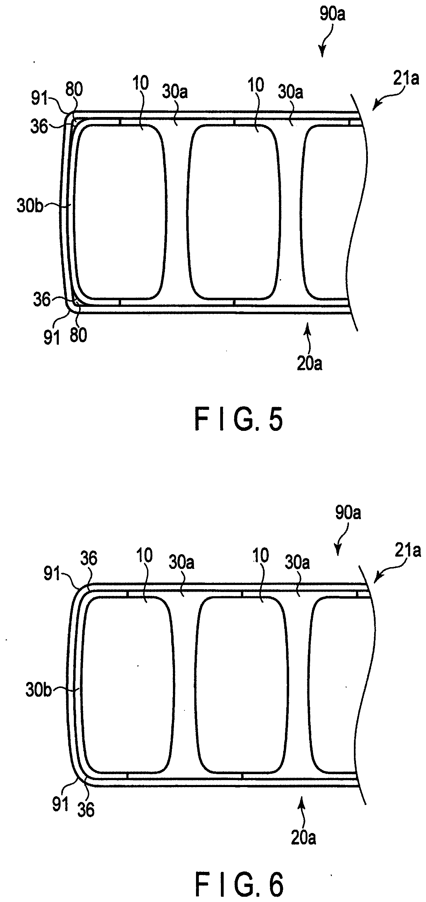

As shown in FIG. 5, each battery cell 10 expands in accordance with an increase in the internal pressure. Accordingly, the case of each battery cell 10 is deformed. The pressure inside the battery cells 10 serves to push the second separators 30b against the short sides of the frame 90a. Pressed by the second separators 30b, the frame 90a expands outward. In other words, the angular portions 91 of the frame 90a are widened, and the angular portions 36 of the second separator 30b move toward the angular portions 91 of the frame 90a. As a result, the volume of the gaps 80 decreases.

The decrease in the volume of the gaps 80 means that the space between the battery cells 120 and the frame 90 is reduced.

When the battery cells 10 expand further shown in FIG.6, there is scarcely a gap between the angular portions 91 of the frame 90a and the angular portions 36 of the second separator 30b. In other words, angular portions 36 come into contact with the inner sides of angular portions 91.

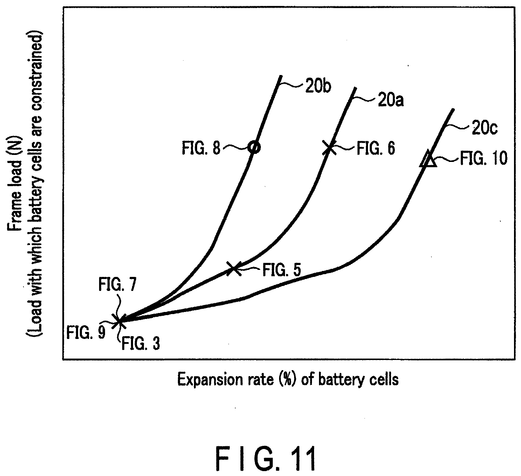

FIG. 11 is a graph in which the states of the stack structure of the first embodiment are plotted, including the states shown in FIGS. 3, 5 and 6. The horizontal axis represents an expansion rate of a battery cell. The vertical axis represents a frame load (the load with which the battery cells are constrained). FIG. 3 shows how the stack structure 20a is before the battery cells 10 expand (i.e., the state of the stack structure 20a at the time of assembly). FIG. 5 shows how the stack structure 20a is when the battery cells 10 expand a little. FIG. 6 shows how the stack structure 20a is when the battery cells 10 expand further than the state shown in FIG. 5.

In the unexpanded stack structure, sufficient gaps 80 exist between angular portions 91 and angular portions 36. In this case, the load exerted on frame 90a is small, and the frame 90 can be easily fitted on the battery cell unit 21b. In the stack structure 20a shown in FIG. 5, the battery cells expand a little. In this case, the first separator 30a is pressed by the battery cell 10 on one side, and presses the battery cell on the other side. As a result, the first separator 30a is deformed a little. The second separator 30b is pressed by the battery cell 10, and presses the frame 90 from within. At the time, the angular portions 36 of the second separator 30b and the angular portions 91 of the frame 90 are deformed, reducing the gaps 80 between angular portions 36 and angular portions 91. In other words, in the stack structure shown in FIG. 5, the frame load increases in accordance with the expansion of the battery cells 10, as shown in FIG. 11.

In the stack structure 20a shown in FIG. 6, the battery cells 10 expand further. As can be seen, in the stack structure 20a, the second separator 30b and the frame 90 are deformed to such an extent that there are practically no gaps 80 between the second separator 30b and the frame 90. In other words, angular portions 36 are in contact with the inner sides of angular portions 91 in the stack structure 20a shown in FIG. 6. In this state, the frame load is significantly larger than the frame loads of the states shown in FIGS. 3 and 5. In the stack structure 20a shown in FIG. 6, practically no gap 80 exists between the frame 90 and the second separator 30b, with the result that the rigidity of the frame 90 increases and the battery cell unit 21b can be constrained reliably.

In the stack structure 20a of the first embodiment, gaps 80 are provided between the angular portions 36 of the second separators, located at the ends as viewed in the stacking direction, and the angular portions 91 of the frame 90. The gaps 80 enable the rigidity of the frame 90 to increase in accordance with the expansion of the battery cells 10. In other words, the frame 90 of the stack structure 20a changes its rigidity in accordance with the expansion of the battery cells due to the temporal deterioration of the battery cells 10. At the time of assembly, the frame 90 of the stack structure 20a can be easily assembled to the battery cell unit 21a. In addition, when the battery cells 10 expand, the stack assembly 20a has sufficient rigidity.

In other words, when the battery cells 10 expand after they are used for more than a certain period, the angular portions 36 of the second separators 30b are deformed in conformity with the angular portions 91 of the frame 90. As a result, the gaps 80, which can be regarded as an allowance of the stack structure 20a, are lost. In accordance with this, the load exerted on the frame 90 increases. The stack structure 20a in this state enables the battery cell unit 21a to be firmly constrained.

The frame 90 having increased rigidity prevents the battery cells 10 from expanding further, and suppresses the temporal performance deterioration of the battery module 1. As a result, the frame 90 lengthens the life of the battery module 1.

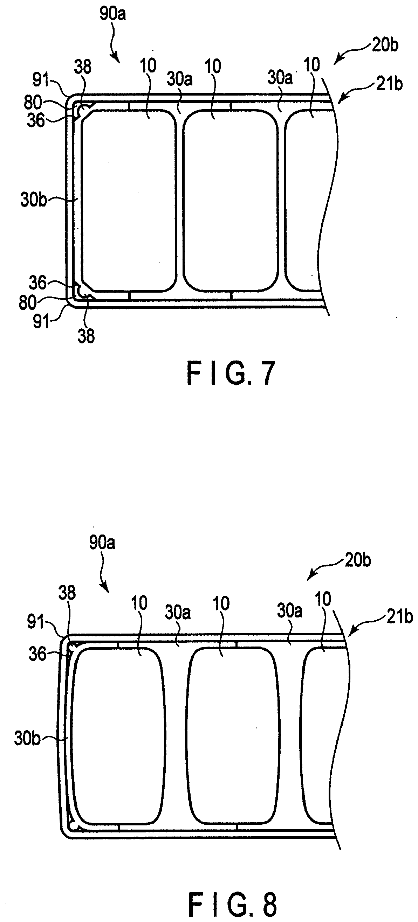

A shape of a separator 30 used in a stacking structure 20b according to the second embodiment will now be described with reference to FIGS. 7 and 8. FIG. 7 is a schematic view illustrating a main portion of the stacking structure 20b. FIG. 8 is a schematic view illustrating a state in which the battery cells 10 of the stacking structure depicted in FIG. 7 expand. In connection with the second embodiment, those members having similar functions or structures to those of the members of the first embodiment will be denoted by the same reference numerals and symbols, and a detained description of such members will be omitted.

The stacking structure 20b of the second embodiment differs from the stacking structure 20a of the first embodiment in that the angular portions 36 of the second separator 38 have a projection 38, as shown in FIG. 7.

In the stacking structure 20b having this structure, the gaps 80 are narrower than the gaps 80 between the first frame 90a and the second separator 30b of the stacking structure 20a of the first embodiment, by the dimension of the projection 38. In other words, the distance between the projection 38 and the corresponding angular portion of the first frame 90a is shorter than the distance between the angular portion 36 and angular portion 91 of the stacking structure 20a of the first embodiment.

As shown in FIG. 8, therefore, the projections 38 of the second separator 30b of the second embodiment come into contact with the angular portions 91 of the frame 90 in the state where the deformations of the battery cells 10 are smaller than those of the battery cells 10 of the stacking structure 20a of the first embodiment. With this structure, the stacking structure 20b suppresses the expansion of the battery cells 10 earlier than the stacking structure 20a of the first embodiment.

With this structure, stacking structure 20b is provided with gaps 80 and can be as flexible as stacking structure 20a when it is assembled to the frame 90, as can be seen in FIG. 11. When the battery cells 10 expand, the angular portions 91 of the frame 90 come into contact with the projections 30. Since the rigidity of the frame 90 is increased thereby, further expansion of the battery cells 10 is suppressed.

In the stacking structure 20b, the projections 30 and angular portions 91 come into contact with each other. Therefore, the ease with which the stacking structure 20b is assembled to the frame 90 can be adjusted by changing the size of the projections 38. Therefore, by adjusting the size of the projections, the stacking structure 20b enables the expansion rate of the battery cells 10 to be adjusted until the frame load increases rapidly.

In the stacking structure 20b, the projections are provided on the second separators 30b. The projections 38 are provided at such positions as correspond to the angular portions 91 of the frame 90. The operator can use the projections 38 as positioning guides when the frame 90 is attached. In other words, the projections 38 of the stacking structure 90 enable the frame 90 to be easily attached.

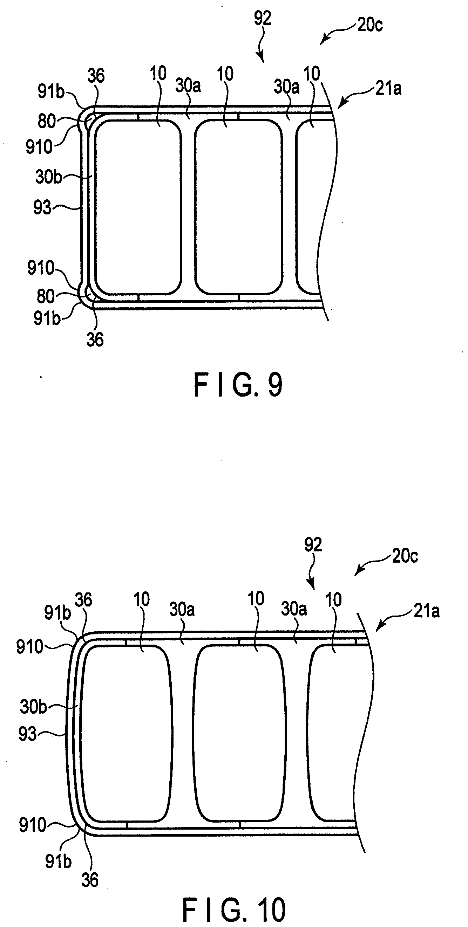

A stacking structure 20c according to the third embodiment will now be described with reference to FIGS. 9 and 10. FIG. 9 is a schematic view showing a main part of the stacking structure 20c of the third embodiment. FIG. 10 is a schematic view illustrating a state in which the battery cells 10 of the stacking structure depicted in FIG. 9 expand. In connection with the third embodiment, those members having similar functions or structures to those of the members of the first embodiment will be denoted by the same reference numerals and symbols, and a detained description of such members will be omitted.

The stacking structure 20c of the third embodiment differs from the stacking structure 20a of the first embodiment in that the angular portions 91b of the frame 92 have a curved portion 910, as shown in FIG. 9. To be more specific, the frame 92 is provided with portions 910 expanding outwardly from the frame 92. With this structure, the angular portions 91b of the frame 92 have more elasticity than that of the angular portions 91 of the frame 90 of the first embodiment.

According to the third embodiment, the shape of the frame 92 is modified without modifying the shape of the second separator 30b. The stacking structure 20c of the third embodiment suppresses the expansion of the battery cell unit 21b, and the frame 92 can be easily assembled to the stacking structure 20c.

The frame 92 has outwardly-expanding curved portions 910 at the angular portions 91b. The curved portions 910 are curved in directions away from the angular portions 36 of the second separators 30b. Accordingly, the stacking structure 20c of the third embodiment is provided with gaps 80 wider than those of the stacking structure 20a of the first embodiment.

As shown in FIG. 10, when the battery cells 10 expand due to an increase in the internal pressure of the battery cells 10, the second separator 30b is pressed against the frame 92 and is deformed, as in the stack structure 20a of the first embodiment. Pressed by the second separator 30b, the frame 92 is deformed outwardly.

To be more specific, as shown in FIG. 10, the curved portions 910 of the angular portions 91b of the frame 92 are pulled in accordance with the expansion of the battery cells 10. In accordance with the expansion of the battery cells 10, the angular portions 36 of the second separator 30b move toward the angular portions 91b of the frame 90. As a result, the angular portions 36 of the second separator 30b are pressed against the angular portions 91b of the frame 92. Since the angular portions 36 of the flame 92 are pressed by angular portions 91b, the rigidity of the frame 92 is increased rapidly, suppressing further expansion of the battery cells 10. In other words, the flexibility of the frame 92 decreases in accordance with a decrease in the size of the gaps 80.

With this structure, the stacking structure 20c is provided with angular portions 91b and can be flexible when it is assembled to the frame 92. As shown in FIG. 10, when the battery cells 10 expand, the curved portions 910 of the angular portions 91b of the stack structure 20c are expanded, and the angles of the angular portions 91b increase. As a result, angular portions 36 move toward angular portions 91b and are pressed against the inside of angular portions 91b. As can be seen in FIG. 11, the frame 92 is flexible when it is assembled to the battery cell unit 21a. After the battery cells 10 expand to a certain degree, the rigidity of the frame 92 increases, enabling the battery cell unit 21a to be secured firmly. As a result, the frame 92 can suppress further expansion of the battery cells 10.

According to the third embodiment, the gaps 80 are provided by modifying the shape of the frame 92 located on the outside of the separator 30. Therefore, the stack structure 20c enables the gaps 80 to be larger than those of the first and second embodiments. In addition, since the curved portions 910 are provided for the angular portions 91b of the frame 92, the stack structure 20c enables the frame 92 to be flexible. At the time of assembly, the frame 92 of the stack structure 20c can be easily assembled.

The angular portions 36 of the second separators 30b are not limited to arch shapes. For example, the angular portions 36 may be substantially right-angled portions. In the present embodiment, the battery cell unit is constrained by means of two frames, but the method for constraining the battery cell unit is not limited to this. For example, the battery cell unit may be constrained by a single frame or by three or more frames.

A stack structure can be formed by combining the second separators 30b described in relation to the second embodiment (which have projections 38) with the frame 92 described in relation to the third embodiment. The curved portions 910 of the frame 92 described in the third embodiment may not be fully expanded but may be curved somewhat in an arch shape, when the battery cells 10 expand. In such a case as well, the frame 92 has increased rigidity from the points at which the curved portions 910 expand to a certain extent, thereby enabling the battery cell unit 21b to be constrained reliably.

While certain embodiments have been described, these embodiments have been presented by way of example only, and are not intended to limit the scope of the invention as defined with the appended claims. Indeed, the novel methods and systems described herein may be embodied in a variety of other forms; furthermore, various omissions, substitutions, and changes in the form of the methods and systems described herein may be made without departing from the scope of the invention as defined with the appended claims. The accompanying claims are intended to cover such forms or modifications as would fall within the scope of the invention.

## Claims

1. A battery module (1) comprising a block-like battery cell unit (21a) in which a plurality of battery cells (10) and a plurality of separators (30) are stacked, and a frame (90) which constrains the battery cell unit (21a) in a stacking direction of the battery cells and the separators,
the separators (30) comprising first separators (30a) including two band portions (35), which are wide as viewed in the stacking direction and opposed to each other, and two end separators (30b) provided at respective ends of the battery cell unit (21a), as viewed in the stacking direction, the end separators (30b) comprising an end plate (32) and two side portions (34) integrally extending in the same direction from the opposite two sides of the end plate (32) and angular portions (36) opposed to the frame (90), and the angular portions (36) of the end separators (30b) being away from angular portions of the frame (91), with gaps (80) interposed,
the battery module (1) being **characterized in that**
the frame (90) is formed of a single member and it is adapted to be fitted onto the battery cell unit (21a) by contact with part of the band portions (35) of the first separators (30a) and part of the end plates (32) and side portions (34) of the two second separators (30b) .

2. The battery module (1) according to claim 1, wherein the gaps (80) decrease in size in accordance with expansion of the battery modules.

3. The battery module (1) according to claim 1 or claim 2, wherein the angular portions of the end separators (36) located at the respective ends come into contact with the angular portions of the frame (91), due to expansion of the battery cells (10).

4. The battery module (1) according to claim 1, wherein the frame (90) extends in accordance with expansion of the battery cells (10), and has rigidity increased in accordance with a decrease in size of the gaps (80) formed between the angular portions of the end separators (36) located at the respective ends and the angular portions of the frame (91) opposed thereto.

5. The battery module (1) according to any one of claims 1 through 4, wherein the angular portions of the end separators (36) located at the respective ends comprise projections (38) projected toward the angular portions of the frame (91), respectively.

6. The battery module (1) according to any one of claims 1 through 5, wherein the angular portions of the frame (91b) comprise curved portions (910) that are curved in directions away from the angular portions.

## Patentansprüche

1. Batteriemodul (1), umfassend eine blockähnliche Batteriezelleneinheit (21a), in der eine Vielzahl von Batteriezellen (10) und eine Vielzahl von Separatoren (30) gestapelt sind, und einen Rahmen (90), der die Batteriezelleneinheit (21a) in einer Stapelrichtung der Batteriezellen und der Separatoren begrenzt, wobei
die Separatoren (30) erste Separatoren (30a), die zwei Bandabschnitte (35) beinhalten, die in der Stapelrichtung betrachtet breit sind und einander gegenüberliegen, und zwei Endseparatoren (30b), die in der Stapelrichtung betrachtet an jeweiligen Enden der Batteriezelleneinheit (21a) bereitgestellt sind, umfassen, die zwei Endseparatoren (30b) eine Endplatte (32) und zwei Seitenabschnitte (34), die sich einstückig in derselben Richtung von den gegenüberliegenden zwei Seiten der Endplatte (32) erstrecken, und angewinkelte Abschnitte (36) gegenüber des Rahmens (90) umfassen, und die angewinkelten Abschnitte (36) der Endseparatoren (30b) von angewinkelten Abschnitten des Rahmens (91) mit dazwischenliegenden Spalten (80) entfernt sind,
das Batteriemodul (1) **dadurch gekennzeichnet ist, dass**
der Rahmen (90) aus einem einzelnen Bauteil gebildet und angepasst ist, an die Batteriezelleneinheit (21a) durch Kontakt mit einem Teil der Bandabschnitte (35) der ersten Separatoren (30a) und einem Teil der Endplatten (32) und Seitenabschnitte (34) der zwei zweiten Separatoren (30b) montiert zu werden.

2. Batteriemodul (1) nach Anspruch 1, wobei die Spalte (80) in Übereinstimmung mit Ausdehnung der Batteriemodule in Größe abnehmen.

3. Batteriemodul (1) nach Anspruch 1 oder Anspruch 2, wobei die angewinkelten Abschnitte der Endseparatoren (36), die an den jeweiligen Enden liegen, mit den angewinkelten Abschnitten des Rahmens (91) aufgrund von Ausdehnung der Batteriezellen (10) in Kontakt kommen.

4. Batteriemodul (1) nach Anspruch 1, wobei sich der Rahmen (90) in Übereinstimmung mit Ausdehnung der Batteriezellen (10) ausdehnt und in Übereinstimmung mit einer Verringerung an Größe der Spalte (80), die zwischen den angewinkelten Abschnitten der Endseparatoren (36), die an jeweiligen Enden liegen, und den angewinkelten Abschnitten des dazu gegenüberliegenden Rahmens (91) gebildet sind, erhöhte Steifigkeit aufweist.

5. Batteriemodul (1) nach einem der Ansprüche 1 bis 4, wobei die angewinkelten Abschnitte der Endseparatoren (36), die an den jeweiligen Enden liegen, Fortsätze (38) umfassen, die sich jeweils zu den angewinkelten Abschnitten des Rahmens (91) hin fortsetzen.

6. Batteriemodul (1) nach einem der Ansprüche 1 bis 5, wobei die angewinkelten Abschnitte des Rahmens (91b) gekrümmte Abschnitte (910) umfassen, die in Richtungen weg von den angewinkelten Abschnitten gekrümmt sind.

## Revendications

1. Module de batterie (1) comprenant une unité à cellules de batterie (21a) semblable à un bloc dans laquelle une pluralité de cellules de batterie (10) et une pluralité de séparateurs (30) sont empilés, et un châssis (90) qui contraint l'unité à cellules de batterie (21a) dans une direction d'empilement des cellules de batterie et des séparateurs,
les séparateurs (30) comprenant des premiers séparateurs (30a) incluant deux portions de bande (35), qui sont larges lorsque vues dans la direction d'empilement et opposés l'un à l'autre, et deux séparateurs d'extrémité (30b) prévus à des extrémités respectives de l'unité à cellules de batterie (21a), lorsque vus dans la direction d'empilement, les séparateurs d'extrémité (30b) comprenant une plaque d'extrémité (32) et deux portions latérales (34) s'étendant d'un seul tenant dans la même direction à partir des deux côtés opposés de la plaque d'extrémité (32) et des portions angulaires (36) opposées au châssis (90), et les portions angulaires (36) des séparateurs d'extrémité (30b) s'écartant des portions angulaires du châssis (91), avec des espacements (80) interposés,
le module de batterie (1) étant **caractérisé en ce que**
le châssis (90) est formé d'un élément unique et il est conçu pour être ajusté sur l'unité à cellules de batterie (21a) par contact avec une partie des portions de bande (35) des premiers séparateurs (30a) et une partie des plaques d'extrémité (32) et des portions latérales (34) des deux seconds séparateurs (30b).

2. Module de batterie (1) selon la revendication 1, dans lequel les espacements (80) diminuent en taille selon l'expansion des modules de batterie.

3. Module de batterie (1) selon la revendication 1 ou la revendication 2, dans lequel les portions angulaires des séparateurs d'extrémité (36) situés aux extrémités respectives entrent en contact avec les portions angulaires du châssis (91), en raison de l'expansion des cellules de batterie (10).

4. Module de batterie (1) selon la revendication 1, dans lequel le châssis (90) s'étend selon l'expansion des cellules de batterie (10), et a une rigidité accrue selon une diminution en taille des espacements (80) formés entre les portions angulaires des séparateurs d'extrémité (36) situés aux extrémités respectives et les portions angulaires du châssis (91) opposées à celles-ci.

5. Module de batterie (1) selon l'une quelconque des revendications 1 à 4, dans lequel les portions angulaires des séparateurs d'extrémité (36) situés aux extrémités respectives comprennent des parties en saillie (38) respectivement en saillie vers les portions angulaires du châssis (91).

6. Module de batterie (1) selon l'une quelconque des revendications 1 à 5, dans lequel les portions angulaires du châssis (91b) comprennent des portions incurvées (910) qui sont incurvées dans des directions s'écartant des portions angulaires.
